# EUROPÄISCHE PATENTANMELDUNG

(11) **EP 3 637 745 A1**
(43) Veröffentlichungstag der Anmeldung: **15.04.2020**
(21) Anmeldenummer: 19202752.2
(22) Anmeldetag: 11.10.2019
(51) Int. Cl.: H04M 1/02, H04M 1/725, H04B 1/3827

(54) **INTEGRIERTE SICHERHEITSVORRICHTUNG UND MODULARE KOMMUNIKATIONSEINRICHTUNG**

(30) Priorität: 12.10.2018 DE 102018125326
(71) Anmelder: Imtradex Hoer-/Sprechsysteme GmbH, 63303 Dreieich (DE)
(72) Erfinder: Bluhm, Tobias, 64390 Erzhausen (DE); Shabani, Farhang, 60431 Frankfurt (DE); Schäfer, Daniel, 64347 Griesheim (DE); Kudernak, Ralf, 63303 Dreieich (DE); Baier, Benjamin, 64839 Münster (DE)
(74) Vertreter: Tergau & Walkenhorst Patentanwälte PartGmbB

(57) **Zusammenfassung**

Integrierte Sicherheitsvorrichtung, (2) umfassend
• eine elektronische Kontrolleinheit (150);
• ein Gehäuse (4) mit einer Vielzahl von Konnektoren (30; 40-46), wobei der jeweilige Konnektor (30; 40-46) zur Verbindung mit einem elektronischen Modul (70-76; 100-110) ausgelegt ist, und wobei der jeweilige Konnektor (30; 40-46) signaleingangs- und/oder signalausgangsseitig mit der Kontrolleinheit (150) verbunden ist;
wobei zumindest ein Funkgerät-Anschluss (40-46) vorgesehen ist

## Beschreibung

Die Erfindung betrifft eine integrierte Sicherheitsvorrichtung. Sie betrifft weiterhin eine modulare Kommunikationsvorrichtung.

In vielen zivilen und militärischen Anwendungsgebieten, beispielsweise bei Feuerwehr-, Polizei- oder militärischen Einsätzen, ist eine Kommunikation der im Einsatz involvierten Personen untereinander und / oder mit einer zentralen Kommunikationsstelle über Funk oder andere Kommunikationskanäle essentiell wichtig und kann lebenswichtig sein. Die Einsatzkräfte können so den Einsatz koordinieren und sich vor Gefahren warnen. Die Sicherheit der Einsatzkräfte steht an erster Stelle und jede einzelne Einsatzkraft sieht sich ständig neuen Gegebenheiten ausgesetzt. Schon heute werden beispielsweise viele Einsatzkräfte mit BodyCams ausgerüstet. Durch die Kombination der unterschiedlichen Technologien wird die Sicherheit der im Einsatz befindlichen Einsatzkräften maßgeblich gesteigert. Übergriffe beim Tragen von BodyCams nehmen ab. Durch die Möglichkeit Live Videos der Einsatzlage zu bekommen, bekommt jede Kommandozentrale oder Leitstelle plötzlich ganz neuen Möglichkeiten der Einsatzplanung und Einsatzleitung. Dadurch ist es möglich, kurzfristig auch auf besondere Gefahrenlagen zu reagieren.

Neben dem benötigten Funkgerät sind für den konkreten Einsatz oft weitere zusätzliche Geräte notwendig wie beispielsweise Sensoren, Lautsprecher, Warneinrichtung, Kameras etc. Die Sicherheit der Einsatzkräfte hängt in vielen Situationen von der zuverlässigen Funktionalität dieser Geräte ab. Einsatzkräfte müssen daher viele Geräte anlegen, und deren ordnungsgemäße Funktionalität im Auge behalten.

Der Erfindung liegt daher die Aufgabe zugrunde, die Sicherheit von Einsatzkräften in derartigen Situationen zu verbessern.

Diese Aufgabe wird in Bezug auf die integrierte Sicherheitsvorrichtung erfindungsgemäß gelöst mit einer integrierten Sicherheitsvorrichtung, umfassend
- eine elektronische Kontrolleinheit;
- ein Gehäuse mit einer Vielzahl von Konnektoren, wobei der jeweilige Konnektor zur Verbindung mit einem elektronischen Modul ausgelegt ist, und wobei der jeweilige Konnektor signaleingangs- und/oder signalausgangsseitig mit der Kontrolleinheit verbunden ist;
- eine Batterie [insbesondere Akku] zur elektrischen Versorgung von der Kontrolleinheit und von Modulen, welche eine elektrische Stromversorgung benötigen und/oder umfassend einen Anschluss für eine Batterie,
wobei zumindest ein Funkgerät-Anschluss vorgesehen ist,
und wobei insbesondere die Kontrolleinheit dazu ausgelegt ist, die Energieversorgung der angeschlossenen Module zu priorisieren. Und oder umfassend einer Möglichkeit eine Batterie einzusetzen oder die Möglichkeit an andere Energiequellen angeschlossen werden zu können.

Vorteilhafte Ausgestaltungen sind Gegenstand der Unteransprüche.

Die Erfindung geht von der Überlegung aus, dass die Verwendung mehrerer separater Geräte in gefährlichen Einsatzszenarien mehrere Sicherheitsrisiken birgt. Die Funktionalität aller Geräte muss unabhängig voneinander sichergestellt werden. Das Anlegen mehrerer Geräte bzw. ihre Handhabung kann zu Fehlern führen. Fehlfunktionen von Geräten können nicht einfach kompensiert werden. Auch die Möglichkeit von Störungen, durch die einzelnen Geräte untereinander wird minimiert.

Wie nunmehr erkannt wurde, lassen sich diese Sicherheitsrisiken deutlich reduzieren, indem gewissermaßen ein gemeinsamer Hub für die benötigten Geräte zur Verfügung gestellt wird, an dem alle Geräte angeschlossen sind. Dadurch, dass die unterschiedlichen Datenströme in einer gemeinsamen Vorrichtung zusammenlaufen, können diese gemeinsam verarbeitet werden, um daraus Schlussfolgerungen über den aktuellen Zustand zu ziehen. Die Signale können zudem gebündelt werden und eine effizientere Kommunikation ist möglich (Bündelung von Informationen zur Reduzierung der Netzauslastung). Insbesondere kann bei lange dauernden Einsätzen die Energieversorgung optimiert werden, dass zumindest die in der aktuellen Situation wichtigsten Systeme aufrechterhalten werden können. So sichert, beispielweise, die permanente Verbindung der Einsatzkraft mit der zuständigen Leitstelle/ Kommandostelle an erster Stelle zur Sicherung der jeweiligen Einsatzkraft.

Bevorzugt ist eine Batterie, insbesondere Akku, vorgesehen zur elektrischen Versorgung von der Kontrolleinheit und/oder von verbundenen Modulen, welche eine elektrische Stromversorgung benötigen und/oder umfassend einen Anschluss für eine Batterie.

Vorteilhafterweise ist wenigstens ein Konnektor vorgesehen ist aus der Gruppe: Funkgerät-Konnektor, LTE-Konnektor, Headset-Konnektor, Lautsprecher-Konnektor, Intercom-Konnektor, Sensor-Konnektor, Bedienkonnektor, PTT-Konnektor (Front), Kamera-Konnektor für Bild und/oder Video, Wärmebild-Konnektoren, USB-Konnektor, Konnektor für ein Batteriefach.

Das Vorgesehensein eines Konnektors bzw. Anschlusses für ein Modul A umfasst bevorzugt, dass dieses Modul an dem Konnektor angeschlossen werden kann und von der Kontrolleinheit erkannt und betrieben werden kann, ggf. auch initialisiert werden kann. Das Vorhandensein eines LEt-Konnektors beispielsweise bedeutet, dass ein LTE-Modul an dem Konnektor angeschlossen, erkannt und betrieben werden kann. Der Funkgeräteanschluss ist bevorzugt ein Konnektor.

Das jeweilige Modul, welches an dem Konnektor der Sicherheitsvorrichtung angeschlossen wird, kann selbst wieder als Konnektor bzw. Anschlussmodul fungieren und den Anschluss wenigstens eines weiteren Moduls bzw. Peripheriegerätes ermöglichen.

Die Sicherheitsvorrichtung kann auch vorteilhafterweise so ausgebildet sein, dass ein am USB-Konnektor angeschlossenes Gerät geladen werden kann.

Vorteilhafterweise ist ein Konnektor bzw. Anschluss vorgesehen, über den eine Batterie bzw. ein Batteriefach (Batteriepack) an die Sicherheitsvorrichtung angeschlossen werden kann, die die Sicherheitsvorrichtung speist. Bevorzugt ist sie Sicherheitsvorrichtung derart ausgebildet, dass durch die angeschlossene Batterie wenigstens ein, insbesondere alle angeschlossenen, Module gespeist werden. Bevorzugt ist dies eine auswechselbare und/oder wieder aufladbare Batterie.

In einer bevorzugten Ausführungsform ist die Kontrolleinheit dazu ausgelegt, die Energieversorgung der angeschlossenen Module zu priorisieren. Bei dieser Priorisierung im Rahmen eines Energiemanagements werden spezifische bzw. ausgewählte Konnektoren abgeschaltet. Zusätzlich oder alternativ dazu werden bevorzugt Funktionalitäten der Kontrolleinheit, insbesondere auf einer Hauptplatine der Kontrolleinheit, eingeschränkt. Dies erfolgt bevorzugt aufgrund einer gewählten Einstellung. Vorteilhafterweise sind in der Kontrolleinheit eine oder mehrere Einstellungen hinterlegt, in denen jeweils ein Schema für eine solche Priorisierung festgelegt ist.

Die konkrete Priorisierung ist vorzugsweise abhängig von den angeschlossenen Konnektoren und ihrer jeweiligen Einstellung. In einer bevorzugten Ausführung werden im Falle einer Unterversorgung die internen Module von Bluetooth, GPS und WLAN ausgeschaltet, um die Priorität auf die Sprachkommunikation zu leiten. Eine flexible Lösung soll durch Einstellungsparameter gegeben werden.

In einer bevorzugten Ausführungsform ist die wenigstens eine Einstellung konfigurierbar, das heißt insbesondere, sie kann verändert oder neu erstellt werden und dann in der Kontrolleinheit hinterlegt bzw. gespeichert werden. Die Programmierung der jeweiligen Einstellung erfolgt bevorzugt durch ein Programmierwerkzeug. Dieses kann insbesondere einen Computer sowie eine entsprechende Programmierumgebung umfassen. Die Einstellung wird drahtlos oder kabelgebunden in die Kontrolleinheit hochgeladen. Alternativ kann durch das Programmierwerkzeug auch eine Einstellung direkt in der Kontrolleinheit verändert werden.

In einer bevorzugten Ausführungsform ist die Kontrolleinheit dazu ausgelegt, akustische Datenströme hinsichtlich ihrer Wiedergabe in einem angeschlossenen Headset zu priorisieren. Es erfolgt somit eine Priorisierung der Kommunikation. Auf diese Weise kann sichergestellt werden, dass die wichtigsten Informationen wahrgenommen werden, wobei in Kauf genommen werden kann, dass weniger wichtige Informationen schlechter aufgenommen werden können. Beispielhaft kann das Signal der Leitstelle auf beiden Kanälen (links / rechts) ausgegeben werden, während andere Signale, beispielsweise von anderen Einsatzkräften jeweils nur auf einem Kanal ausgegeben werden.

Zusätzlich oder alternativ dazu können auch in jedem Kanal einzeln oder für beide Kanäle jeweils die Lautstärke des einzelnen Signals und/oder die Balance und/oder relative Lautstärkenverhältnisse aufgrund der Priorisierung eingestellt werden. In einer bevorzugten Ausführungsform ist eine Einstellung für eine derartige Priorisierung konfigurierbar, das heißt insbesondere sie kann verändert oder neu erstellt werden und dann in der Kontrolleinheit hinterlegt bzw. gespeichert werden. Die Programmierung der jeweiligen Einstellung erfolgt bevorzugt durch ein Programmierwerkzeug. Dieses kann insbesondere einen Computer sowie eine entsprechende Programmierumgebung umfassen. Die Einstellung wird drahtlos oder kabelgebunden in die Kontrolleinheit hochgeladen. Alternativ kann durch das Programmierwerkzeug auch eine Einstellung direkt in der Kontrolleinheit verändert werden.

Die integrierte Sicherheitsvorrichtung umfasst bevorzugt eine Aufzeichnungseinheit, die dazu ausgelegt ist, wenigstens einen über ein an einem Konnektor angeschlossenen Modul empfangenen Datenstrom aufzuzeichnen, insbesondere persistent zu speichern. Diese Einheit kann separat als Hardware- und/oder Softwaremodul vorgesehen sein oder als Modul hardware- und/oder softwareseitig in die Kontrolleinheit integriert sein. Dies betrifft auch die anderen hier beschriebenen Einheiten.

Bevorzugt umfasst die integrierte Sicherheitsvorrichtung eine Warneinheit, welche aus aktuellen und/oder aufgezeichneten Daten ein Gefahrenprofil erstellt und ein Warnsignal generiert. Das Warnsignal kann haptisch und/oder akustisch und/oder visuell ausgebildet sein. Es kann an die Einsatzkraft abgegeben werden und/oder an eine Leitstelle übermittelt werden.

Die akustische Ausgabe erfolgt bevorzugt im angeschlossenen Headset, die optische Ausgabe erfolgt bevorzugt über an einen Konnektor angeschlossene LEDs. Die LEDs können auch in ein an einen Konnektor angeschlossenes Modul bzw. Gerät integriert sein.

Das Gefahrenprofil wird bevorzugt erstellt aufgrund von Daten, die von einer Leitstelle oder anderen Einheiten an die Sicherheitsvorrichtung übertragen und/oder Daten, die durch ein an die Sicherheitsvorrichtung angeschlossenes Modul gemessen bzw. bereitgestellt werden. Diese Daten können zum Beispiel Vitalparameter des Trägers der Sicherheitsvorrichtung sein. Beispielsweise können Puls und/oder Adrenalinwert und/oder Zuckerspiegel überwacht werden. Das Warnsignal kann physikalisch ausgegeben werden. Alternativ oder zusätzlich dazu kann es auch per Funk weitergeleitet werden an eine Leitstelle oder andere Einheiten. Dies kann über eine Gerät-zu-Gerät-Kommunikation erfolgen.

Die integrierte Sicherheitsvorrichtung umfasst bevorzugt eine Signal-zu-Text-Einheit welche dazu ausgebildet ist, einkommende und/oder hinterlegte Daten in Audiodaten von menschlicher Sprache umzuwandeln und über ein an die Vorrichtung angeschlossenes Hörgerät auszugeben und/oder aufzuzeichnen, insbesondere persistent zu speichern.

In einer bevorzugten Ausführungsform werden die Daten vor der Umwandlung in Audiodaten in eine andere Sprache übersetzt.

Zur Umwandlung und/oder Übersetzung der Wörter kann eine entsprechende Sprachsoftware auf einem Server hinterlegt sein. Die Wörter werden zum Server gesendet, der sie in ein sprachliches Audiosignal umwandelt, welches er an die Sicherheitsvorrichtung schickt, in der dieses Signal dann akustisch ausgegeben wird. Alternativ oder zusätzlich kann eine derartige Software auch direkt in die Sicherheitsvorrichtung integriert sein, insbesondere als Modul in der Kontrolleinheit.

Vorteilhafterweise umfasst die Sicherheitsvorrichtung eine Datenbearbeitungseinheit, die dazu ausgelegt ist, Signale zusammenzufassen und / oder zu komprimieren, um sie dann über wenigstens einen Kanal auszusenden.

Vorteilhafterweise umfasst die Auswerteeinheit zu eingehenden und/oder ausgehenden Datenströmen Informationen. Diese Datenströme können insbesondere Vitalparameter umfassen, beispielsweise aus der Gruppe: Blutdruck, Körpertemperatur, Herzfrequenz, Leitfähigkeit. Diese Daten können an andere Sicherheitsvorrichtungen und/oder eine Leitstelle/Zentrale übermittelt werden und/oder gespeichert werden. Sie können auch mit entsprechenden GNSS-Daten (GPS, Galileo etc.) und/oder Umgebungsdaten wie Temperatur, Luftfeuchtigkeit etc. verknüpft werden. Die Sensordaten können dann beispielsweise in einer Zentrale ausgewertet werden, wo Rückschlüsse über den physiologischen Zustand der Einsatzkräfte und/oder deren Umgebungsbedingungen, ggf. im Zusammenhang mit dem Ort, an dem sie sich befinden, gezogen werden können.

Die integrierte Sicherheitsvorrichtung umfasst vorteilhafterweise eine Übersetzungseinheit, die dazu ausgelegt ist, einkommende Datenströme mit natürlicher Sprache in eine andere Sprache als Audiosignal zu übersetzen. Zur Umwandlung und/oder Übersetzung der Wörter kann eine entsprechende Sprachsoftware auf einem Server hinterlegt sein. Die Wörter werden zum Server gesendet, der sie in ein sprachliches Audiosignal umwandelt, welches er an die Sicherheitsvorrichtung schickt, in der dieses Signal dann akustisch ausgegeben wird. Alternativ oder zusätzlich kann eine derartige Software auch direkt in die Sicherheitsvorrichtung integriert sein, insbesondere als Modul in der Kontrolleinheit.

Die integrierte Sicherheitsvorrichtung umfasst bevorzugt einen Headset- und/oder Lautsprecher Konnektor und eine Funkkanaleinheit, die dazu ausgelegt ist, die Audiodatenströme von einer Mehrzahl von angeschlossenen Funkgeräten auf die Audiokanäle eines angeschlossenen Headsets und/oder Lautsprechers zu verteilen und/oder an eine andere Quelle weiterzuleiten. Insbesondere kann sie dazu ausgelegt sein, den Audiostrom in kodierter Form über ein Funkmodul, insbesondere ein LTE-Modul an eine Informationsquelle wie beispielsweise eine Leitstelle, weiterzuleiten.

Dabei wird bevorzugt von wenigstens zwei Audiodatenströmen/Audiosignalen die Balance und/oder die Lautstärke unterschiedlich gewählt werden. Bei zwei Audioströmen wird beispielhaft ein Audiosignal auf dem linken, das andere auf dem rechten Kanal ausgegeben oder umgekehrt. Ein dritter Kanal wird beispielsweise auf beiden Kanälen ausgegeben. Bei den Signalen können Lautstärke und/oder Balanceverhältnisse oder absolute Werte bedarfsweise eingestellt werden.

Die Kontrolleinheit ist bevorzugt dazu ausgebildet, ein angeschlossenes Modul zu erkennen und/oder zu initialisieren. Die Kontrolleinheit ist, vorteilajhafterweise auf einem PCB, in dem Gehäuse, insbesondere zentral, angeordnet und mit wenigstens einem, insbesondere mt allen, Konnektoren signaleingangsseiting und signalausgangsseitig verbunden. Die Sicherheitsvorrichtung ist eine integrierte Sicherheitsvorrichtung, was bedeutet, dass die Kontrolleinheit und weiter elektronische Komponenten wie beispielsweise eine Baterie zusammen mit der Kontrolleinheit in dem gemeinsamen Gehäuse angeordnet sind. Dadurch ist die Sicherheitsvorrichtung sehr gut für Einsätze geeignet, da nicht befürchtet werden muss, dass wichtige funktionalke Komponenten verloren gehen.

Die Konnektoren sind bevorzugt derart mit der Kontrolleinheit verbunden, dass eine Pug-und-Play-Funktionalität bereitgestellt wird. Dies bedeutet, dass keiner der seitlich am Gehäuse angeordneten Konnektoren nur den Anschluss von einem bestimmten oder einer geringen Anzahl von Modulen ermöglicht. Jedes der vorgesehen Module kann an jedem der Konnektoren angeschlossen werden. Die Kontrolleinheit ist dazu ausgebildet, an jedem der Konnektoren ein angeschlossenes Modul zu erkennen, zu initialisieren und zu betreiben. Dadurch wird eine größtmögliche Flexibilität bereitgestellt in Bezug auf die Verteilung der benötigten Module auf die verfügbaren Konnektoren. Die Module können insbesondere so angeordnet werden, dass eine Bedienung während eines Einsatzes besonders ergonomisch und/oder sicher erfolgen kann.

Die Module sind somit untereinander, innerhalb desselben Typs (Seitenmodul oder font-/Heckmodul), uneingeschränkt an den jeweiligen Montagepositionen tauschbar (4 baugleiche Seitenmodule, 2 baugleiche Front-/ Heckmodule) - Montagepositionierungshilfe vorhanden. Die Nutzung der neu eingesteckten Module erfolgt im "Plug and Play" Verfahren.

Diese Ausbildung erlaubt auch die einsatzbezogene Tauschbarkeit der Module. Das Herausnehmen eines Moduls und das Tauschen durch ein anderes geeignetes Modul wird ermöglicht ohne Demontage des gesamten Gerätes. Jedes Modul stellt bevorzugt ein eigenes Peripheriegerät dar.

Die Kontrolleinheit ist bevorzugt dazu ausgebildet, Datenpakete, die über eine Funkverbindung verschickt werden, nach vorgegebenen Kriterien zusammenzufassen und gemeinsam zu verschicken. Auf diese Weise kann sichergestellt werden, dass auch bei schlechter Netzabdeckung die entsprechenden Informationen ihr Ziel erreichen.

Vorteilhafterweise ist die Vorrichtung dazu konfiguriert zu erkennen und/oder zu initialisieren wenigstens ein angeschlossenes Modul aus der Gruppe: Funkgerät, LTE-Modul, Headset, Lautsprecher, Intercom, Sensor, Bedienmodul, PTT-Modul, Kamera, Wärmebild-Kamera.

In einer besonders bevorzugten Ausführungsform ist sie dazu konfiguriert, alle dieser Module zu erkennen und/oder zu initialisieren. Auf diese Weise wird eine besonders flexible Sicherheitsvorrichtung bereitgestellt, die für eine Vielzahl von Anwendungsmöglichkeiten ertüchtigt ist.

Bevorzugt ist die Vorrichtung konfiguriert zu erkennen und/oder zu initialisieren ein angeschlossenes Modul aus der Gruppe: Funkgerät, Headset, Bedienmodul, Bodycam. In dieser Ausgestaltung ist sie besonders geeignet für Einsatzkräfte der Polizei oder Feuerwehr.

Vorteilhafterweise ist die Vorrichtung konfiguriert ist zu erkennen und/oder zu initialisieren wenigstens eine angeschlossene Intercomeinheit.

Vorteilhafterweise ist die Vorrichtung konfiguriert zu erkennen und/oder zu initialisieren ein angeschlossenes Modul aus der Gruppe: Funkgerät, Headset, Bedienmodul, Mobilfunkmodul, insbesondere LTE-Mobilfunkmodul, Sensor.

Vorteilhafterweise ist die Vorrichtung konfiguriert zu erkennen und/oder zu initialisieren ein angeschlossenen D2D-(Device-to-Device)-Modul. Dieses Modul implementiert insbesondere den LTE-Standard Release 14. Auf diese Weise können Einsatzkräfte miteinander kommunizieren, wenn kein Mobilfunknetz zur Verfügung steht und/oder das Netzwerkmodul ausgefallen ist.

Das Gehäuse der Sicherheitsvorrichtung weist bevorzugt einen Querschnitt eines Vieleckes auf mit einer Mehrzahl von Seitenflächen und einer Vorderfläche und einer Hinterfläche.

In einer bevorzugten Ausführung ist an das Gehäuse eine Tragvorrichtung und/oder Befestigungsvorrichtung angebracht, die insbesondere das Tragen der Sicherheitsvorrichtung am Körper und/oder Rucksack ermöglicht. Die Befestigungsvorrichtung ist vorteilhafterweie als Tragegurt oder Trageband ausgebildet. Sie kann auch als verschließbarer Hakenverschluss ausgebildet sein.

Die Konnektoren sind an Seitenflächen und/oder Front- und Heckflächen des Gehäuses angeordnet. Das Gehäuse nimmt die Kontrolleinheit auf. Es ist nur ein einziges Gehüse vorgesehen, in dem die Kontrolleinheit angeordnet ist und an dem die Konnektoren seitlich und/oder vorne und hinten angeordnet sind.

In einer besonders bevorzugten Ausführungsform weist das Gehäuse den Querschnitt eines Quadrates auf. Vorteilhafterweise weist es den Querschnitt eines Vielecks, vorzugsweise eines Rechtecks, insbesondere mit konkavem Randbereich, auf.

Bevorzugt ist auf der Vorderseite und/oder der Hinterseite des Gehäuses ein Konnektor für ein PTT-Modul angeordnet.

An wenigstens einer Seitenfläche, insbesondere an allen Seitenflächen, ist vorteilhafterweise ein Konnektor angeordnet.

Das Gehäuse ist bevorzugt aus Glas- oder kohlefaserverstärktem Kunststoff und/oder einem industriellen Kunststoff, insbesondere PTFE; und/oder aus Leichtmetall und/oder einer Verbundkonstruktion mehrerer unterschiedlicher Werkstoffe gefertigt.

Die Konnektierung der Module, die an den Konnektoren angebracht sind, erfolgt vorteilhafterweise über Federkontaktstifte. Die Befestigung der Module an der dem Gehäuse bzw. der Haupteinheit erfolgt bevorzugt über Schraubverbindungen - diese sind lösbar mit gängigem Werkzeug, bzw. werkzeugfrei.

Die integrierte Sicherheitsvorrichtung ist dazu mannbezogen dazu ausgebildet, von einer Einsatzkraft im Einsatz getragen zu werden. Dazu weist sie insbesondere die maximalen Dimensionen 110 mm x 110 mm x 40 mm (Breite x Länge x Höhe) auf. Das gesamte Gewicht der Sicherheitsvorrichtung beträgt bevorzugt maximal 500 g.

Vorteilhafterweise weist die Sicherheitsvorrichtung einen Tragegurt und/oder eine Tragevorrichtung auf, mit dem Sie umgehängt werden kann und/oder an einem Kleidungsstück und/oder einem Rucksack befestigt werden kann. Bevorzugt weist Bevorzugt ist sie kompatibel mit dem gängigen MOLLE-System. Bevorzugt weist sie eine Befestigungsvorrichtung auf, mit der sie an Gürtel oder Koppel befestigt werden kann.

Das Gehäuse weist vorteilhafterweise eine Breite und Länge auf, die jeweils größer sind, bevorzugt mehr als doppelt so groß, wie die Höhe bzw. Dicke der Sicherheitsvorrichtung. Sie weist damit zwei flache Seiten auf, die senkrecht zur Höhe sind. Eine dieser Seiten fungiert als Rückseite und kann im Einsatz an die Kleidung der Einsatzkraft anliegen. Auf der gegenüberliegenden, dem Körper abgewandten Seite, ist vorzugsweise ein Taster für die Sprachaktivierung eines Funkgeräts bzw. ein PTT Modul installiert bzw. installierbar. Auf diese Weise ist die Bedienung des Funkgerätes zuverlässig möglich.

Die Sicherheitsvorrichtung ist vorteilhafterweise nach ergonomischen Gesichtspunkten ausgerichtet. Die Bedienelemente sind entsprechend groß ausgebildet. Seitenmodule, die an die Konnektoren angeschlossen, weisen daher, sofern sie eine Tastbetätigungsfunktionalität aufweisen, bevorzugt erhabene Tasten auf.

Die Sicherheitsvorrichtung ist in einer bevorzugten Ausführungsform derart ausgebildet, dass Peripheriegeräte in den Modulen, drahtlos oder über Steckverbinder an das Gehäuse angebracht werden. Die Kontrolleinheit ist dazu ausgebildet, an den Modulen angeschlossene Peripheriegeräte zu erkennen und zu initialisieren bzw. direkt angeschlossenene Peripheriegeräte bzw. drahtlos mit der Sicherheitsvorrichtung verbundene Peripheriegeräte zu erkennen und zu initialisieren.

Die Kontrolleinheit ist in einer bevorzugten Ausführungsform derart ausgebildet, dass ihre Firmware durch Anschluss an einen PC ausgetauscht werden kann (lokal) oder über eine Verbindung mit der Cloud. Bevorzugt umfasst die Firmware Informationen zu anschließbaren Modulen, insbesondere zu deren Erkennung, Initialisierung und Betrieb.

In Bezug auf die modulare Kommunikationseinrichtung wir die Erfindung erfindungsgelöst mit einer integrierten Sicherheitsvorrichtung und wenigstens einem angeschlossenen Sensor bzw. Modul.

Die integrierte Sicherheitsvorrichtung, die eine integrierte Kommunikationsvorrichtung ist, bildet zusammen mit wenigstens einem Modul, insbesondere Sensor, eine modulare Kommunikationseinrichtung.

Vorteilhafterweise umfasst die modulare Kommunikationsvorrichtung wenigstens ein angeschlossenes Modul aus der Gruppe: Funkgerät, LTE-Modul, Headset, Lautsprecher, Intercom-Modul, Sensor, Bedienmodul, PTT-Modul, Kamera, Wärmebild-Kamera.

Bevorzugt sind modulartig mit der modularen Kommunikationsvorrichtung Funkgerät, Headset, Bedienmodul, und Bodycam verbunden.

Vorteilhafterweise ist mit der modularen Kommunikationseinheit wenigstens eine Intercomeinheit verbunden.

Vorteilhafterweise sind der modularen Kommunikationseinheit modulartig verbunden Funkgerät, Headset, Bedienmodul, Mobilfunkmodul (insbesondere LTE), Sensor.

Vorteilhafterweise ist mit der modularen Kommunikationseinheit modulartig verbunden wenigstens ein D2D.

Vorteilhafterweise ist mit der modularen Kommunikationseinheit modulartig verbunden wenigstens ein Funkmodul.

Vorteilhafterweise ist mit der modularen Kommunikationseinheit modulartig verbunden wenigstens ein Sensor, welcher bevorzugt menschliche Vitalparameter misst, insbesondere aus der Gruppe: Blutdruck, Herzfrequenz, V20max, Blutsauerstoffgehalt, Blutkohlendioxidgehalt.

Die Vorteile der Erfindung liegen insbesondere darin, dass durch die integrierte Zusammenführung der Signale von den angeschlossenen Geräten die Sicherheit des Benutzers der Vorrichtung stark erhöht werden kann. Das Gewicht wird reduziert und die Handhabung wird vereinfacht. Module mit neu entwickelten Technologien können von der integrierten Sicherheitsvorrichtung unmittelbar verwendet werden. Unterschiedliche Technikkomponenten werden auf kleinem Raum verbunden und zu einem für den Einsatz vorteilhaften System vereint. Durch die Möglichkeit der freien Konfigurierbarkeit ist die Sicherheitsvorrichtung besonders zukunftsfähig und -sicher aufgebaut.

Ein Ausführungsbeispiel der Erfindung wird anhand einer Zeichnung näher erläutert. Darin zeigen in stark schematisierter Darstellung:

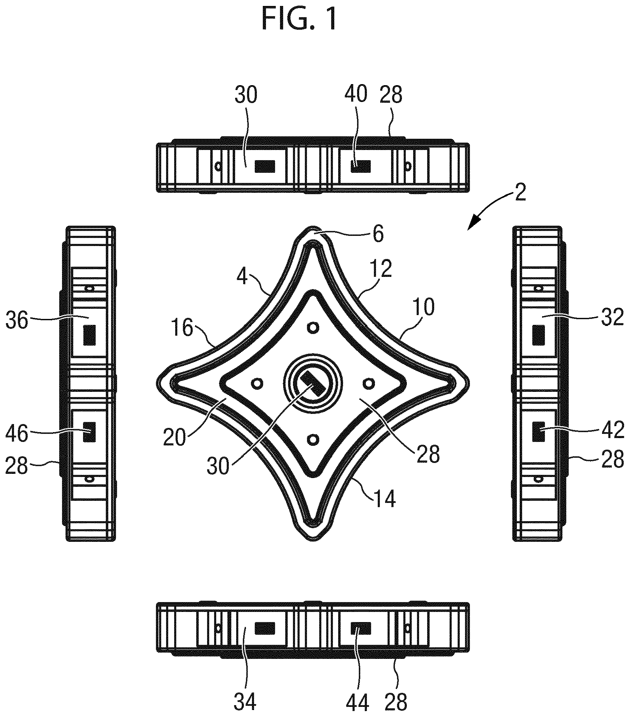

- FIG. 1: eine Draufsicht und vier Seitenansichten einer Sicherheitsvorrichtung in einer bevorzugten Ausführungsform;
- FIG. 2: eine perspektivische Ansicht der Sicherheitsvorrichtung gemäß Anspruch 1;
- FIG. 3: eine perspektivische Ansicht der Sicherheitsvorrichtung gemäß Anspruch 1 mit einem angeschlossenen PTT-Modul;
- FIG. 4: eine Unteransicht und eine Draufsicht der Sicherheitsvorrichtung und vier Module;
- FIG. 5: mehrere Module zum Anschluss an die Sicherheitsvorrichtung gemäß Anspruch 1;
- FIG. 6: ein Sensormodul in einer bevorzugten Ausführungsform in mehreren Ansichten;
- FIG. 7: eine schematische Darstellung einer Kontrolleinheit der Sicherheitsvorrichtung;
- FIG. 8: eine Sicherheitsvorrichtung in bevorzugter Ausführungsform in einem seitlichen Schnitt;
- FIG. 9: zeigt eine Sicherheitsvorrichtung in bevorzugter Ausführungsform in einer Explosionsdarstellung; und
- FIG. 10: zeigt eine Sicherheitsvorrichtung in einer bevorzugten Ausführungsform mit einem angeschlossenen Frontmodul.

Gleiche Teile sind in allen Figuren mit denselben Bezugszeichen versehen.

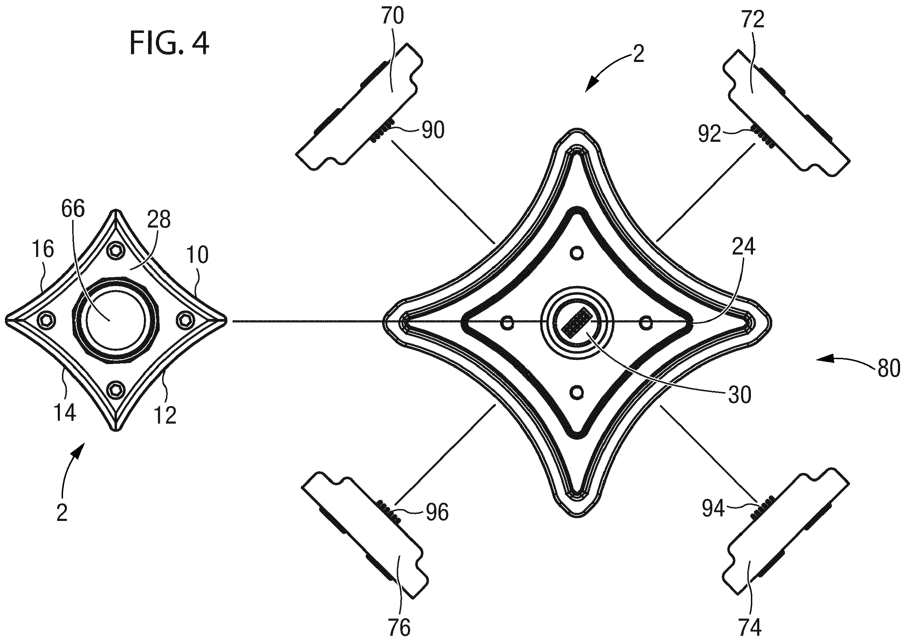

Eine in FG. 1 dargestellte integrierte Sicherheitsvorrichtung 2 umfasst ein Gehäuse 4, welches bevorzugt einen Rahmen 6 aufweist, welcher vier seitliche bogenförmige Rahmenabschnitte 10, 12, 14, 16 umfasst. Das Gehäuse umfasst eine Vorderseite 20 sowie eine Hinterseite 24 (siehe FIG. 4), Auf der Vorderseite ist eine Frontplatte 28 montiert, in der ein Konnektor 30 angeordnet ist.

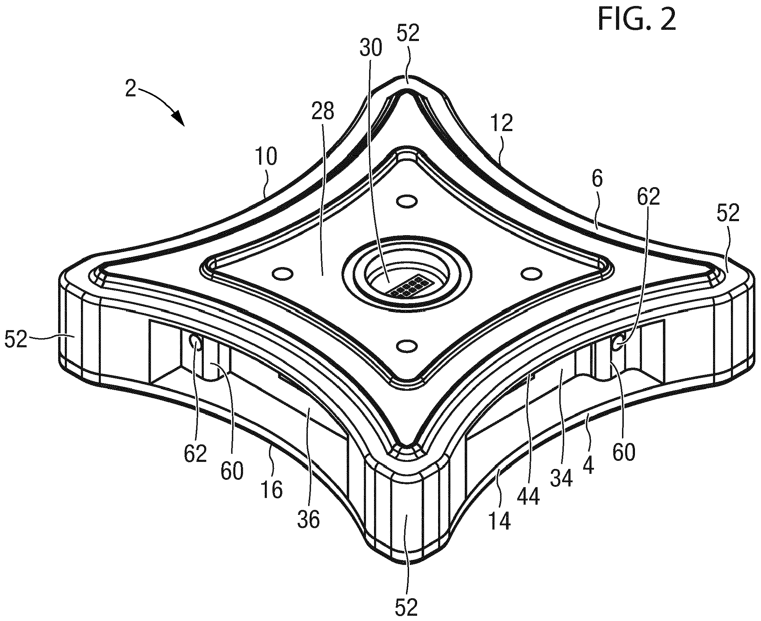

Wie in den Seitenansichten des Gehäuses 2 zu sehen ist, weist das Gehäuse 2 vier Seitenflächen 30, 32, 34, 36 auf. In jeder der Seitenflächen ist jeweils ein Konnektor 40, 42, 44, 46 angeordnet. Wie in FIG. 2 ersichtlich ist, weist das Gehäuse verstärkte Eckbereiche 52 auf, die für eine Stoßfestigkeit des Gehäuses 4 sorgen. Die verstärkten Eckbereiche 52 werden bevorzugt durch Einbringen eines Metallüberzugs, Überspritzen der Ecken mit PUR bzw. Gummi PUR bzw. Gummi gebildet. Die Eckbereiche können bevorzugt auch als separate, abnehmbare Teile ausgeführt sein, die insbesondere an ein Hauptgehäuse angesteckt werden.

Das Gehäuse 4 ist im Bereich der Seitenflächen 30, 32, 34, 36 bevorzugt jeweils gleich aufgebaut. Wie anhand der Seitenfläche 34 erläutert wird, ist diese an beiden Seiten begrenzt durch Vorsprünge 60, in denen jeweils eine Öffnung 62 für ein Befestigungselement, insbesondere eine Schraube, vorgesehen ist. In der jeweiligen Seitenfläche 30, 32, 34, 36 ist jeweils bevorzugt mittig der jeweilige Konnektor 40, 42, 44, 46 angeordnet. Das Gehäuse 4 ist bevorzugt aus Glas- oder kohlefaserverstärktem Kunststoff und/oder einem industriellen Kunststoff, insbesondere PTFE; und/oder aus Leichtmetall gefertigt. Im Falle eines Plastikmaterials wird es bevorzugt teilweise in einem Spritzgussverfahren hergestellt. Die Konnektoren 40, 42, 44, 46 sind in der dargestellten bevorzugten Ausführungsform gleich ausgebildet, insbesondere hinsichtlich äußerer Formgestaltung und Anzahl und Anordnung der Kontakte.

Der jeweilige Konnektor ist vorteilhaftserweise als eine Standard-Leiste, insbesondere pop-pin-Leiste, ausgebildet. In einer bevorzugten Ausführungsform ist der jeweilige Konnektor buw. Steckverbinder magnetisch ausgebildet. Führt der Benutzer nun das anzuschließende Modul, welches bevorzugt eine magentisierbare, insbesondere Metall, an den Konnektor heran, wird der durch die Magentkraft in Richtung des Konnektors gezogen, so dass die Verbindung vereinfacht wird und angegenehmer abläuft. Dadurch wird auch ein Anpressdruck an den Konnektor erzeugt und eine vorgegebene Dichtigkeit kann realisiert werden. Zudem wrd im Einsatz ein schnelles Wechseln der Module ermöglicht.

Alternativ oder in Kombination dazu können auch Schrauben oder andere Fixierelemente zur Befestigung des Moduls am entsprechenden Konnektor verwendet werden.

Dadurch, dass alle vier Seitenflächen 30, 32, 34, 36 gleich ausgestaltet sind und die Konnektoren 40, 42, 44, 46 gleich ausgebildet sind, ist die Sicherheitsvorrichtung 2 sehr flexibel aufgebaut hinsichtlich der Konfiguration der anzuschließenden Module.

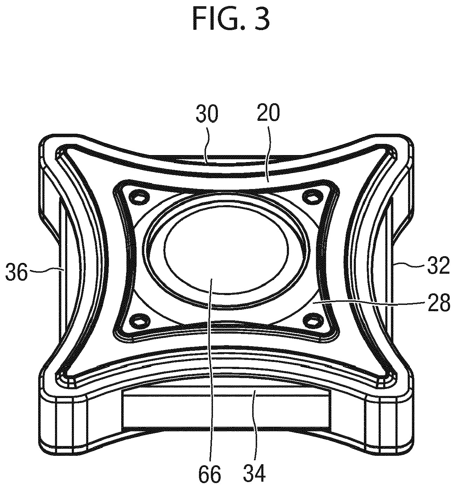

In FIG. 3 ist die Sicherheitsvorrichtung perspektivisch dargestellt. Auf der Vorderseite 20 ist ein PTT-Modul angeschlossen mit einem Druckknopf 66. Das Gehäuse hat in einer bevorzugten Ausführung die Maße 120mm x 120mm x 40 mm. Es hat bevorzugt die maximalen Ausmaße 150mm x 150mm x 50mm.

In FIG. 4 ist die Sicherheitsvorrichtung links in einer Draufsicht und rechts in einer Sicht von unten dargestellt. Weiterhin dargestellt sind vier Module 70, 72, 74, 76, die ausgebildet sind an die Sicherheitsvorrichtung 2 angeschlossen zu werden. Die integrierte Sicherheitsvorrichtung 2 und wenigstens ein angeschlossenes bzw. modulartig verbundenes Modul 70, 72, 74, 76 bilden eine modulare Kommunikationseinheit 80. Jedes Modul 70, 72, 74, 76 umfasst jeweils einen Konnektor 90, 92, 94, 96, der im angeschlossenen Zustand mit dem jeweiligen Konnektor 40, 42, 44, 46 der Sicherheitsvorrichtung 2 verbunden wird.

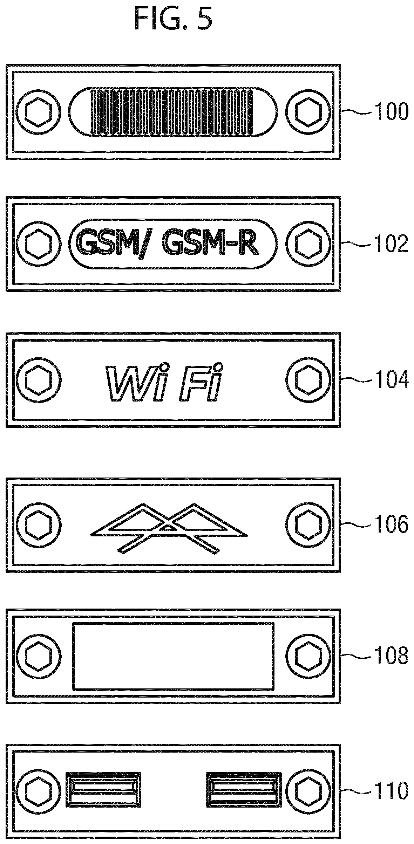

In FIG. 5 ist beispielhaft eine Auswahl an Modulen 100, 102, 104, 106, 108, 110 dargestellt. Das Modul 100 ist als Sensor ausgebildet, der beispielsweise die Temperatur misst. Das Modul 102 ist als Mobilfunkmodul, insbesondere als Modul für GSM/GSM-R, ausgebildet. Das Modul 104 ist als WiFi-Modul ausgebildet. Das Modul 106 ist als Sensor ausgebildet, der beispielsweise die Temperatur misst. Das Modul 108 ist als Infrarot Sensor ausgebildet. Es sind auch Module denkbar, die elektromagnetische Strahlung in anderen Frequenzbereichen messen, beispielsweise im sichtbaren oder im ultravioletten Bereich. Das Modul 110 ist als USB-Modul mit zwei USB-Anschlüssen ausgebildet.

Alle Module 100-110 sind in ihren Abmessungen und Anschlussmöglichkeiten so ausgebildet, dass sie an jeder der Seitenwände bzw. Seitenfläche 30, 32, 34, 36 an die Sicherheitsvorrichtung 2 angeschlossen werden können. Dadurch wird eine hohe Konfigurationsmöglichkeit der Sicherheitsvorrichtung 2 bereitgestellt. Die Module 100-110 können so an die Sicherheitsvorrichtung 2 angedockt werden, dass sie im Betriebszustand ihre Funktion optimiert ausführen können und für den Benutzer gut erreichbar sind.

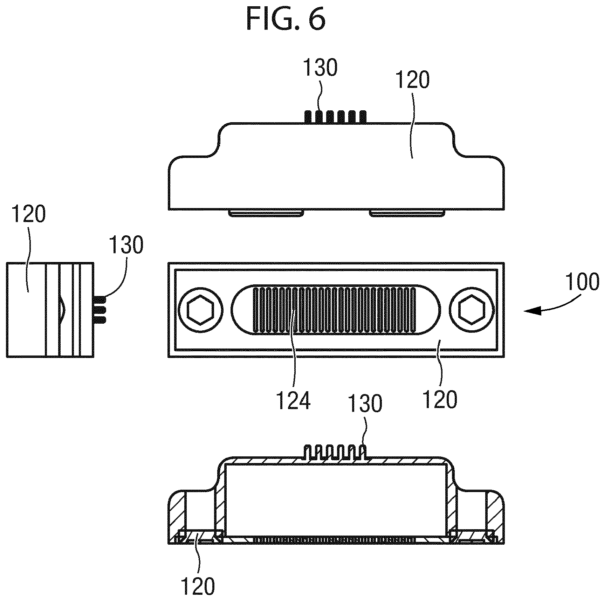

In FIG. 6 ist das Modul 100, welches als Sensor ausgebildet ist, in mehreren Ansichten dargestellt. Das Modul 100 weist ein Gehäuse 120 auf, welches den funktionalen Komponenten Platz bietet wie in diesem Beispiel einem Infrarotsensor 124. Der Anschluss 130 ist ausgebildet, das Modul 100 mit der Sicherheitsvorrichtung 2 zu verbinden.

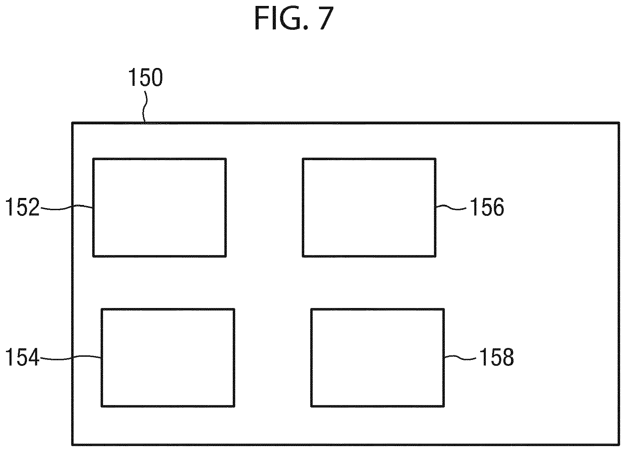

Die Sicherheitsvorrichtung 2 umfasst eine schematisch in FIG. 7 dargestellte Kontrolleinheit 150, welche in der dargestellten bevorzugten Ausführungsform wenigstens vier Kontrolleinheitsmodule 152, 154, 156, 158 aufweist.

Die Sicherheitsvorrichtung 2, ist dazu ausgelegt, angeschlossene Module zu erkennen und/oder zu initialisieren. Dies ist insbesondere dadurch realisiert, dass die Kontrolleinheit 150 ausgelegt ist, angeschlossene Module zu erkennen und/oder zu initialisieren.

Das Kontrolleinheitsmodul 152 ist als Priorisierungseinheit ausgebildet. Die Priorisierungseinheit ist in dem gezeigten bevorzugten Ausführungsbeispiel dazu ausgelegt, die Energieversorgung der angeschossenen Module zu priorisieren. Dazu ist insbesondere ein Regelwerk in der Priorisierungseinheit hinterlegt, in dem kodifiziert ist, wie die verfügbare Energie auf die angeschlossenen Module aufgeteilt wird bzw. wann und ob Module abgeschaltet werden. Diese Kriterien hängen bevorzugt von der Anzahl und dem Typ der angeschlossenen Module als auch dem jeweils aktuellen Energieverbrauch und/oder der verfügbaren Energie ab. Sie hängen bevorzugt auch ab von einem spezifizierten Einsatzszenario und/oder Umgebungsdaten.

Die Umgebungsdaten werden von angeschlossenen Sensoren gemessen und/oder von anderen Geräten, insbesondere anderen Sicherheitsvorrichtungen und/oder einer zentralen Leitstelle an die Sicherheitsvorrichtung 2 übertragen.

Das Kontrolleinheitsmodul 154 ist als Warneinheit ausgelegt. Das Kontrolleinheitsmodul 156 ist als Auswerteeinheit ausgebildet. Das Kontrolleinheitsmodul 158 ist als Signal-zu-Text-Einheit ausgebildet.

In der Auswerteeinheit werden die Signale von wenigstens einem angeschlossenen Sensor ausgewertet und mit Toleranzwerten bzw. Toleranzbändern verglichen. Beispielsweise wird überprüft, ob die gemessene Temperatur geringer ist als ein in der Kontrolleinheit 150 hinterlegter Schwellenwert. Wird dieser überschritten (beispielsweise in einer zeitlichen Mittelung), signalisiert dies die Auswerteeinheit der Warneinheit. Die Warneinheit generiert wenigstens ein Warnsignal, welches beispielsweise optisch und/oder akustisch von der Sicherheitsvorrichtung 2 ausgegeben wird. Es kann auch über ein Funkmodul an eine andere Quelle wie beispielsweise eine Leitstelle oder an andere Geräte in der Umgebung übermittelt werden.

In einer weiteren bevorzugten Ausführungsform ist an die Sicherheitsvorrichtung 2 ein LTE-Modul angeschlossen, über das beispielsweise ballistische Wetterdaten an die Kontrolleinheit 150 weitergeleitet werden. Weiterhin ist an die Sicherheitsvorrichtung 2 vorteilhafterweise ein Bluetoothmodul angeschlossen. In die Kontrolleinheit 150 ist bevorzugt ein Bluetoothmodul integriert. Die Kontrolleinheit 150 weist in diesem Beispiel ein Wetterdatenauswertungsmodul auf, was in der FIG. 7 nun mit dem Bezugszeichen 152 versehen ist. Das Wetterdatenauswertungsmodul übergibt die ausgewerteten Daten an ein Zielfernrohransteuerungsmodul, welches nun mit dem Bezugszeichen 154 in FIG. 7 versehen ist. Dieses Modul 154 berechnet aus den von Modul 152 vorselektierten Wetterdaten Ansteuerungs- und/oder Justierungsdaten, die dann über das Bluetooth-Modul an das Zielfernrohr übermittelt werden.

Bevorzugt sind als Module Sensoren an das Sicherheitsvorrichtung 2 angeschlossen, die beispielsweise Blutdruck der Einsatzkraft und/oder Umgebungstemperatur messen und an die Kontrolleinheit 150 übermitteln, die diese Daten beispielsweise an die Leitstelle weitergibt. Module 156, 158 können beispielsweise Module sein, die diese Daten auswerten und übermitteln.

In einer weiteren bevorzugten Ausfürhungsform ist ein D2D-Modul an die Sicherheitsvorrichtung 2 angeschlossen. Die Kontrolleinheit 150 ist derart konfiguriert, dass sie mit Hilfe des D2D-Moduls andere D2D-Module in der Nähe erkennt und einen Kommunikationslink mit diesen Modulen aufbaut. Auf diese Weise kann ein Backup-Kommunikationsnetz aufgebaut werden, welches genutzt werden kann, wenn beispielsweise Kommunikation über LTE bzw. das entsprechende Mobilfunknetz ausfällt. Das D2D-Modul kann auch mit einer Repeaterfunktion betrieben werden.

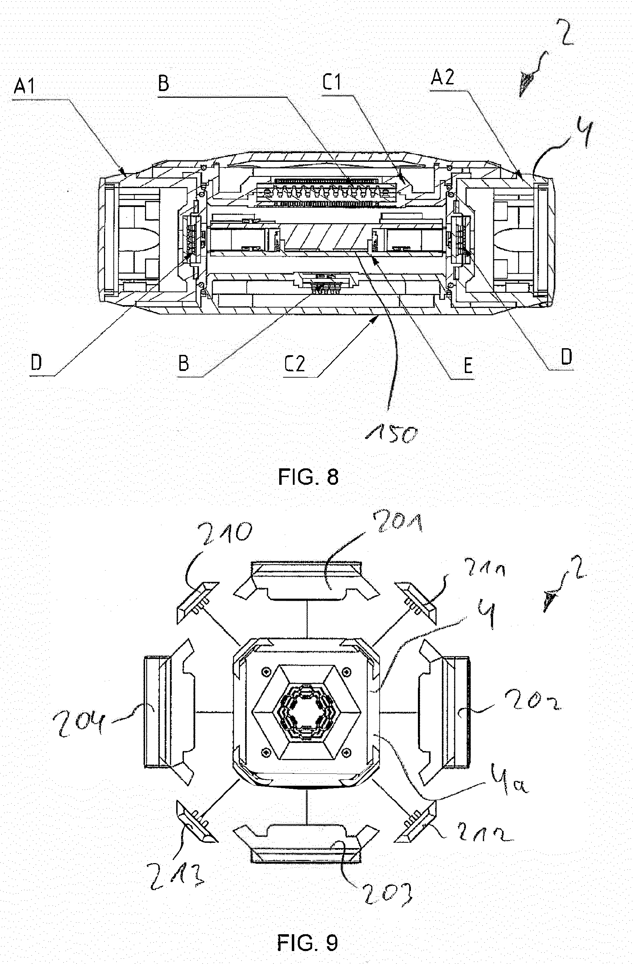

In FIG. 8 ist eine Sicherheitsvorrichtung 2 in einer weiteren bevorzugten Ausführungsform dargestellt. Die FIG. zeigt verschiedene Module im eingebauten Gehäuse, wodurch verdeutlicht wird, wie die Konnektierung der Module mit der Sicherheitsvorrichtung funktioniert. An einer Position A1 ist ein erstes Seitenmodul verbaut, an einer Position A2 ist ein zweites Seitenmodul verbaut. An einer Position B ist ein Frontkonnektor dargestellt, an dem beispielsweise ein PTT-Modul angebracht werden kann. Die Position C1 zeigt einen Frontkonnektor als Modulvariante. Die Position C2 zeigt einen Frontkonnektor in einer Abdeckplattenvariante.

In der Position D ist ein Konnektor für ein seitlich anzubringendes Modul dargestellt. Die Position E bezeichnet die Hauptplatine bzw. PCB mit der elektronischen Kontrolleinheit 150.

In FIG. 9 ist eine Sicherheitsvorrichtung 2 in einer bevorzugten Ausführungsform in einer Explosionsdarstellung dargestellt. Diese FIG. zeigt den Gesamtaufbau des Systems mit einem Gehäuse 4, bei dem Eckenschutzteile 211, 212, 213, 214 separat ausgebildet sind und an einem Hauptgehäuse 4a angebracht werden. Weiterhin sind vier Module 201, 202, 203, 204 dargestellt, die an das Hauptgehäuse 4a angesteckt werden. Durch die abnehmbaren Eckenschutzteile 211, 212, 213, 214 können je nach Anwendungszweck verschiedene Varianten des Gesamtgehäuses 4 realisiert werden durch Verwendung verschiedener Eckenschutzteile 211, 212, 213, 214.

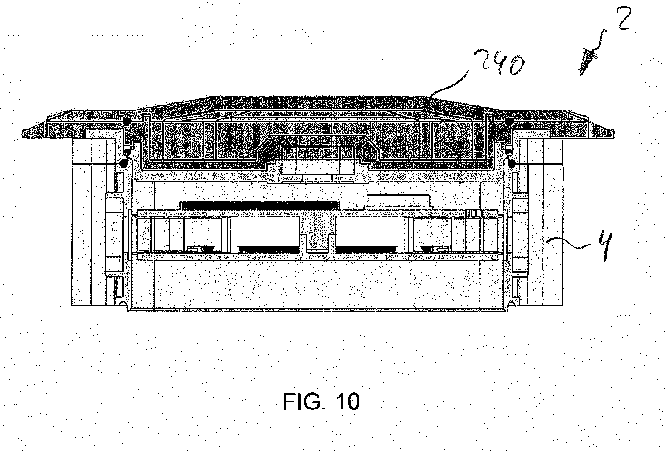

In FIG. 10 ist eine Sicherheitsvorrichtung 2 in einem seitlichen Schnitt dargestellt mit einem angeschlossenen Frontmodul 240 .

## Patentansprüche

1. Integrierte Sicherheitsvorrichtung, (2) umfassend
• eine elektronische Kontrolleinheit (150);
• ein Gehäuse (4) mit einer Vielzahl von Konnektoren (30; 40-46), wobei der jeweilige Konnektor (30; 40-46) zur Verbindung mit einem elektronischen Modul (70-76; 100-110) ausgelegt ist, und wobei der jeweilige Konnektor (30; 40-46) signaleingangs- und/oder signalausgangsseitig mit der Kontrolleinheit (150) verbunden ist;
wobei zumindest ein Funkgerät-Anschluss (40-46) vorgesehen ist.

2. Integrierte Sicherheitsvorrichtung (2) nach Anspruch 1, wobei wenigstens ein Konnektor (30; 40-46) vorgesehen ist aus der Gruppe: Funkgerät-Konnektor, LTE-Konnektor, Headset-Konnektor, Lautsprecher-Konnektor, Intercom-Konnektor, Sensor-Konnektor, Bedienkonnektor, PTT-Konnektor (Front), Kamera-Konnektor für Bild und/oder Video, Wärmebild-Konnektoren, Anschluss-Konnektor, insbesondere USB-Konnektor.

3. Integrierte Sicherheitsvorrichtung (2) nach Anspruch 1 oder 2, wobei die Kontrolleinheit (150) dazu ausgelegt ist, die Energieversorgung der angeschlossenen Module (70-76; 100-110) zu priorisieren.

4. Integrierte Sicherheitsvorrichtung (2) nach einem der Ansprüche 1 bis 3, wobei die Kontrolleinheit (150) dazu ausgelegt ist, akustische Datenströme hinsichtlich ihrer Wiedergabe in einem angeschlossenen Headset zu priorisieren.

5. Integrierte Sicherheitsvorrichtung (2) nach einem der Ansprüche 1 bis 4, umfassend eine Warneinheit, welche aus aktuellen und/oder aufgezeichneten Daten ein Gefahrenprofil erstellt und ein Warnsignal generiert.

6. Integrierte Sicherheitsvorrichtung (2) nach einem der Ansprüche 1 bis 5, umfassend eine Signal-zu-Text-Einheit, welche dazu ausgebildet ist, einkommende und/oder hinterlegte Daten in Audiodaten von menschlicher Sprache umzuwandeln und über ein an die Vorrichtung angeschlossenes Hörgerät auszugeben und/oder aufzuzeichnen, insbesondere persistent zu speichern.

7. Integrierte Sicherheitsvorrichtung (2) nach einem der Ansprüche 1 bis 6, umfassend eine Datenbearbeitungseinheit, die dazu ausgelegt ist, Signale zusammenzufassen und / oder zu komprimieren, um sie dann über wenigstens einen Kanal auszusenden.

8. Integrierte Sicherheitsvorrichtung (2) nach einem der Ansprüche 1 bis 7, umfassend eine Übersetzungseinheit, die dazu ausgelegt ist, einkommende Datenströme mit natürlicher Sprache in eine andere Sprache als Audiosignal zu übersetzen.

9. Integrierte Sicherheitsvorrichtung (2) nach einem der Ansprüche 1 bis 8, umfassend einen Headset- und/oder Lautsprecher Konnektor, weiter umfassend eine Funkkanaleinheit, die dazu ausgelegt ist, die Audiodatenströme von einer Mehrzahl von angeschlossenen Funkgeräten auf die Audiokanäle eines angeschlossenen Headsets und/oder Lautsprechers zu verteilen und/oder an eine andere Quelle weiterzuleiten.

10. Integrierte Sicherheitsvorrichtung (2) nach Anspruch 9, wobei von wenigstens zwei Audiodatenströmen die Balance und/oder die Lautstärke unterschiedlich gewählt werden.

11. Integrierte Sicherheitsvorrichtung (2) nach einem der Ansprüche 1 bis 10, wobei die Kontrolleinheit (150) dazu ausgebildet ist, ein angeschlossenes Modul (70-76; 100-110) zu erkennen und/oder zu initialisieren.

12. Integrierte Sicherheitsvorrichtung (2) nach Anspruch 11, die konfiguriert ist zu erkennen und/oder zu initialisieren ein angeschlossenes Modul (70-76; 100-110) aus der Gruppe: Funkgerät, Headset, Bedienmodul, Bodycam.

13. Integrierte Sicherheitsvorrichting (2) nach einem der vorherigen Ansprüche, wobei an das Gehäuse eine Tragvorrichtung und/oder Befestigungsvorrichtung angebracht ist, die insbesondere das Tragen der Sicherheitsvorrichtung am Körper und/oder Rucksack ermöglicht.

14. Integrierte Sicherheitsvorrichtung (2) nach einem der vorherigen Ansprüche, wobei das Gehäuse (4) einen Querschnitt eines Vieleckes aufweist mit einer Mehrzahl von Seitenflächen (30.36) und einer Vorderseite (20) und einer Hinterseite (24).

15. Modulare Kommunikationseinrichtung (80), umfassend eine integrierte Sicherheitsvorrichtung nach einem der vorherigen Ansprüche und wenigstens ein angeschlossenes Modul (70-76; 100-110), insbesondere einen angeschlossenen Sensor.
